# EUROPEAN PATENT APPLICATION

(11) **EP 4 563 648 A1**
(43) Date of publication of application: **04.06.2025**
(21) Application number: 23846498.6
(22) Date of filing: 25.07.2023
(51) Int. Cl.: C08L 29/04, C08K 5/17, C08K 5/3415, C08L 29/02

(54) **RESIN COMPOSITION, MOLDED ARTICLE, MULTILAYER LAMINATE, AND METHOD FOR MANUFACTURING RESIN COMPOSITION**

(30) Priority: 29.07.2022 JP 2022121935; 06.02.2023 JP 2023016442
(71) Applicant: Mitsubishi Chemical Corporation, Tokyo 100-8251 (JP)
(72) Inventor: HATANAKA, Makoto, Tokyo 100-8251 (JP); IKUBO, Eri, Tokyo 100-8251 (JP); TAKESHITA, Keisuke, Tokyo 100-8251 (JP)
(74) Representative: Hoffmann Eitle
(86) International application number: PCT/JP2023/027121
(87) International publication number: WO 2024/024768

(57) **Abstract**

A resin composition includes an ethylene-vinyl alcohol copolymer (A), a nitrogen-containing compound (B), an alkali metal compound (C), and an alkaline earth metal compound (D). The ratio (C/D) of the amount of the alkali metal compound (C) on a metal basis to the amount of the alkaline earth metal compound (D) on a metal basis is greater than 0.5. The nitrogen-containing compound (B) has a structure having two or fewer nitrogen atoms bonded to each carbon atom, and satisfies the following (1) and/or (2):(1) the nitrogen-containing compound (B) has a molecular weight equal to or less than 280 (2) the nitrogen-containing compound (B) has an amine equivalent weight of less than 225 g/eq as defined by the following formula: amine equivalent weight (g/eq) = the molecular weight of the nitrogen-containing compound (B)/the number of primary amino groups (-NH₂) and secondary amino groups (-NH-) in the nitrogen-containing compound (B).

## Description

### TECHNICAL FIELD

The present disclosure relates to a resin composition and more particularly to a resin composition in which thickening over time during heating is suppressed.

### BACKGROUND ART

An ethylene-vinyl alcohol copolymer (which hereinafter may be referred to as "EVOH") has an extremely strong intermolecular force because of hydrogen bonds between hydroxyl groups present in the polymer side chains. EVOH therefore has a high crystallinity and a high intermolecular force even in the amorphous portions. Thus, a film using EVOH is less likely to transmit gas molecules and exhibits excellent gas barrier properties.

However, EVOH has a hydroxyl group which is relatively active in a molecule and therefore may undergo oxidation and crosslinking reactions in a high temperature molten state even in the inside of an extrusion molding machine with almost no oxygen. EVOH therefore easily thickens over time and tends to be difficult to process stably.

In order to solve such a problem, for example, JP-A-H11-106592 discloses a resin composition containing a saponified ethylene-vinyl acetate copolymer (A) having an ethylene content of 20 to 60 mol% and a saponification degree of 90 mol% or more, acetic acid (B), and magnesium acetate and/or calcium acetate (C), wherein the content of (B) is equal to or less than 0.05 parts by mass relative to 100 parts by mass of (A), and the content of (C) is 0.001 to 0.02 parts by mass relative to 100 parts by mass of (A) on a metal basis. JP-AH11-106592 also discloses that this resin composition can be used to produce a molded article with excellent long-run moldability during melt molding and with excellent appearance with less fish eyes, striation or discoloration, a laminate formed from the molded article has reduced odor, and the laminate is also excellent in interlayer adhesion after secondary processing such as stretching and deep drawing.

### SUMMARY

### PROBLEMS TO BE SOLVED BY THE DISCLOSURE

In recent years, with diversified feed block and die designs in molding apparatuses and with demands for increasing functionality, such as reducing film thicknesses and increasing the number of layers of multilayer structures in end products, the molding apparatuses tend to be more sophisticated. On the other hand, in the complicated molding apparatus with increasing functionality, the degraded resins may be mixed in final products, some of which fail to meet acceptability criteria. Thus, the productivity (long-run moldability) tends to be reduced.

The technology disclosed in JP-A-H11-106592 provides excellent long-run moldability during melt molding, but the long-run moldability is insufficient in the complicated molding apparatus with increasing functionality due to the degraded resins mixed in final products. There is a need for further improvement in long-run moldability.

The inventors of the present disclosure have noted resin retention which is inevitable in the structure of molding apparatuses, and assumed that such retention may cause degraded resins. In order to prevent occurrence of such degraded resins, the present disclosure provides a resin composition in which thickening over time during heating that may cause retention is suppressed, a molded article including the resin composition, a multilayer structure having a layer including the resin composition, and a method for producing the resin composition.

### MEANS FOR SOLVING THE PROBLEMS

The inventors of the present disclosure have conducted elaborate studies in view of such a situation and found that a resin composition in which thickening over time during heating is suppressed can be obtained by adding a particular nitrogen-containing compound, alkali metal compound, and alkaline earth metal compound to EVOH, and by setting a ratio of the amount of the alkali metal compound on a metal basis to the amount of the alkaline earth metal compound on a metal basis to a particular range.

Specifically, the present disclosure provides the following [1] to [10].
[1] A resin composition comprising an EVOH (A), a nitrogen-containing compound (B), an alkali metal compound (C), and an alkaline earth metal compound (D), wherein
   a ratio (C/D) of the amount of the alkali metal compound (C) on a metal basis to the amount of the alkaline earth metal compound (D) on a metal basis is greater than 0.5, and
   the nitrogen-containing compound (B) has a structure having two or fewer nitrogen atoms bonded to each carbon atom, and satisfies the following (1) and/or (2).
      (1) The nitrogen-containing compound (B) has a molecular weight equal to or less than 280.
      (2) The nitrogen-containing compound (B) has an amine equivalent weight of less than 225 g/eq as defined by the following formula (I): amine equivalent weight (g/eq) = the molecular weight of the nitrogen-containing compound (B)/the number of primary amino groups (-NH2) and secondary amino groups (-NH-) in the nitrogen-containing compound (B).
[2] The resin composition according to [1], wherein the nitrogen-containing compound (B) includes a primary amino group and/or a secondary amino group.
[3] The resin composition according to [1] or [2], wherein the nitrogen-containing compound (B) has a melting point of 70 to 290°C.
[4] The resin composition according to any one of [1] to [3], wherein the nitrogen-containing compound (B) is 2-imidazolidinone.
[5] The resin composition according to any one of [1] to [3], wherein the nitrogen-containing compound (B) is an amino acid.
[6] The resin composition according to any one of [1] to [3] and [5], wherein the nitrogen-containing compound (B) is a basic amino acid.
[7] The resin composition according to any one of [1] to [3], [5], and [6], wherein the nitrogen-containing compound (B) is histidine.
[8] A molded article comprising the resin composition according to any one of [1] to [7].
[9] A multilayer structure having at least one layer comprising the resin composition according to any one of [1] to [7].
[10] A method for producing the resin composition according to any one of [1] to [7], the method comprising mixing the EVOH (A), the nitrogen-containing compound (B), the alkali metal compound (C), and the alkaline earth metal compound (D).

### EFFECTS OF THE DISCLOSURE

The resin composition according to the present disclosure is suppressed in thickening over time during heating and consequently has excellent long-run moldability.

### EMBODIMENTS OF THE DISCLOSURE

A detailed description of the present disclosure below provides exemplary preferred embodiments.

In the present disclosure, the expression "x and/or y" (x and y are each a given configuration or component) is intended to mean the following three meanings: only x; only y; and x and y.

In the present disclosure, the expression "X to Y" (X and Y are given numbers) is intended to encompass "preferably more than X" or "preferably less than Y" unless otherwise specified, in addition to the meaning "equal to or more than X and equal to or less than Y".

In the present disclosure, the expression "equal to or more than X" (X is a given number) or "equal to or less than Y" (Y is a given number) is intended to encompass the meaning "preferably more than X" or "preferably less than Y".

A resin composition according to an embodiment of the present disclosure (hereinafter referred to as "the present resin composition") contains an EVOH (A), a nitrogen-containing compound (B), an alkali metal compound (C), and an alkaline earth metal compound (D). The ratio (C/D) of the amount of the alkali metal compound (C) on a metal basis to the amount of the alkaline earth metal compound (D) on a metal basis is greater than 0.5. The nitrogen-containing compound (B) has a structure having two or fewer nitrogen atoms bonded to each carbon atom, and satisfies the following (1) and/or (2).
(1) The nitrogen-containing compound (B) has a molecular weight equal to or less than 280.
(2) The nitrogen-containing compound (B) has an amine equivalent weight of less than 225 g/eq as defined by the following formula. Formula) amine equivalent weight (g/eq) = the molecular weight of the nitrogen-containing compound (B)/the number of primary amino groups (-NH2) and secondary amino groups (-NH-) in the nitrogen-containing compound (B).

Each component will be described below.

### [EVOH (A)]

The EVOH (A) used in the present resin composition is typically a non-water-soluble thermoplastic resin obtained by saponifying an ethylene-vinyl ester copolymer which is a copolymer of ethylene and a vinyl ester monomer. Typically, vinyl acetate is used as the vinyl ester monomer from an economic standpoint.

The copolymerization of the ethylene and the vinyl ester monomer can be performed by any known polymerization method such as solution polymerization, suspension polymerization, or emulsion polymerization. Typically, solution polymerization using methanol as a solvent is used. The saponification of the resulting ethylene-vinyl ester copolymer may be performed by a known method.

The thus produced EVOH (A) mainly contains an ethylene structural unit and a vinyl alcohol structural unit, and further contains a small amount of a vinyl ester structural unit left unsaponified when the saponification degree is less than 100 mol%.

Typically, vinyl acetate is used as the vinyl ester monomer from an economic standpoint and in terms of efficiency in impurity treatment during manufacture. Other examples of the vinyl ester monomer other than vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. These can be used alone or in combination of two or more. Among those, an aliphatic vinyl ester having 3 to 20 carbon atoms, more preferably 4 to 10 carbon atoms, particularly preferably 4 to 7 carbon atoms is preferred.

The ethylene structural unit content of the EVOH (A) is typically 20 to 60 mol%, preferably 25 to 50 mol%, and particularly preferably 27 to 35 mol%, as measured in conformity with ISO14663. If this content is too low, the gas barrier properties in high humidity and the melt moldability tend to be reduced. Conversely, if too high, the gas barrier properties tend to be reduced. The ethylene structural unit content can be controlled by the pressure of ethylene when the vinyl ester monomer and ethylene are copolymerized.

The saponification degree of the EVOH (A) is typically 90 to 100 mol%, preferably 95 to 100 mol%, and particularly preferably 99 to 100 mol%, as measured in conformity with JIS K6726 (where a solution obtained by homogeneously dissolving the EVOH (A) in a water/methanol solvent is used). If the saponification degree is too low, the gas barrier properties tend to be reduced. The saponification degree can be controlled by the amount of a saponification catalyst (typically, an alkaline catalyst such as sodium hydroxide is used), temperature, time, and the like when the ethylene-vinyl ester copolymer is saponified.

The EVOH (A) typically has a melt flow rate (MFR) (at 210°C with a load of 2160 g) of 0.5 to 100 g/10 minutes, preferably 1 to 50g/10 minutes, and particularly preferably 3 to 35 g/10 minutes. If this MFR is too high, film formability tends to be unstable. If too low, the viscosity becomes too high and melt extrusion tends to be difficult.

The MFR serves an indicator of the polymerization degree of the EVOH (A) and can be adjusted by the amount of polymerization initiator and/or the amount of solvent when ethylene and a vinyl ester monomer are copolymerized.

The EVOH (A) may further contain a structural unit derived from any of the following comonomers in a range that does not impair the effects of the present disclosure (for example, equal to or less than 10 mol% of the EVOH (A)).

Examples of the comonomers include olefins such as propylene, 1-butene, and isobutene; hydroxyl-containing α-olefins such as 3-buten-1-ol, 3-butene-1,2-diol, 4-penten-1-ol, and 5-hexene-1,2-diol, and derivatives including esterification products and acylation products of these hydroxyl-containing α-olefins; hydroxyalkylvinylidenes such as 2-methylenepropane-1,3-diol and 3-methylenepentane-1,5-diol; hydroxyalkylvinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts of these acids, and mono- or dialkyl esters of these acids, the one or two alkyl groups each having 1 to 18 carbon atoms; acrylamide and analogues thereof such as N-alkylacrylamides in which the alkyl has 1 to 18 carbon atoms, N,N-dimethylacrylamide, 2-acrylamidopropanesulfonic acid and salts thereof, and acrylamidopropyldimethylamine and acid salts or quaternary salts thereof; methacrylamide and analogues thereof such as N-alkylmethacrylamides in which the alkyl has 1 to 18 carbon atoms, N,N-dimethylmethacrylamide, 2-methacrylamidopropanesulfonic acid and salts thereof, and methacrylamidopropyldimethylamine and acid salts or quaternary salts thereof; N-vinylamides such as N-vinylpyrrolidone, N-vinylformamide, and N-vinylacetamide; vinyl cyanide compounds such as acrylonitrile and methacrylonitrile; vinyl ethers such as alkyl vinyl ethers in which the alkyl has 1 to 18 carbon atoms, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silane compounds such as trimethoxyvinylsilane; halogenated allylated compounds such as allyl acetate and allyl chloride; allyl alcohol compounds such as allyl alcohol and dimethoxyallyl alcohol; trimethyl(3-acrylamido-3-dimethylpropyl)ammonium chloride, and acrylamido-2-methylpropanesulfonic acid. These can be used alone or in combination of two or more.

In particular, an EVOH copolymerized with a hydroxyl-containing α-olefin, that is, an EVOH having a hydroxyl group in a side chain, is preferred in order to maintain gas barrier properties and provide good secondary processability. An EVOH having a primary hydroxyl group in a side chain is more preferred, and an EVOH having a 1,2-diol structure in a side chain is particularly preferred.

The EVOH resin having a primary hydroxyl group in a side chain typically has a structural unit derived from a monomer having the primary hydroxyl group in the amount of 0.1 to 20 mol% of the EVOH, preferably 0.5 to 15 mol%, particularly preferably 1 to 10 mol%.

Further, the EVOH (A) may be a "post-modified" EVOH, such as urethanized, acetalized, cyanoethylated, or oxyalkylenated EVOH.

Further, the EVOH (A) may be a mixture of two or more EVOHs, for example, with different saponification degrees, different polymerization degrees, and different comonomers.

The EVOH (A) is preferably a main component of the present resin composition. As used herein the main component refers to a component present in the amount equal to or more than 50% by mass of the present resin composition, preferably equal to or more than 70% by mass, more preferably 80% by mass, even more preferably equal to or more than 90% by mass, particularly preferably equal to or more than 95% by mass.

### [Nitrogen-Containing Compound (B)]

The nitrogen-containing compound (B) used in the present resin composition is a compound including nitrogen in its structure, in which two or fewer nitrogen atoms are bonded to each carbon atom in its structure, and the following (1) and/or (2) is satisfied:
(1) a molecular weight equal to or less than 280
(2) an amine equivalent weight of less than 225 g/eq as defined by the following formula (I): amine equivalent weight (g/eq) = the molecular weight of the nitrogen-containing compound (B)/the number of primary amino groups (-NH2) and secondary amino groups (-NH-) in the nitrogen-containing compound (B)

It is particularly preferable that the nitrogen-containing compound (B) satisfies the above (1) and (2).

The nitrogen-containing compound (B) is preferably an amino compound containing at least one of a primary amino group (-NH₂), a secondary amino group (-NH-), a tertiary amino group (refer to the following general formula (I)), and a quaternary amino group (refer to the following general formula (II)) in terms of the effect of suppressing thickening over time.

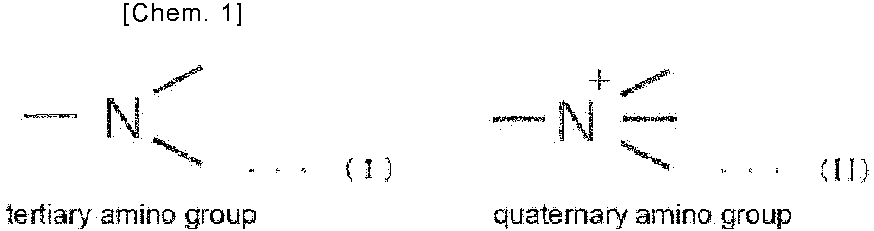

Among those, the nitrogen-containing compound (B) is preferably an amino compound containing a primary amino group (-NH₂) and/or a secondary amino group (-NH-). The inclusion of the primary amino group (-NH₂) and/or the secondary amino group (-NH-) tends to further enhance the effect of suppressing thickening over time.

The nitrogen-containing compound (B) has a structure having two or fewer nitrogen atoms bonded to each carbon atom. In other words, all carbon atoms included in the nitrogen-containing compound (B) are each bonded to zero, one, or two nitrogen atoms. When the number of nitrogen atoms bonded to one carbon atom is equal to or fewer than two, the effect of suppressing thickening over time can be enhanced. For example, a compound with a structure having three nitrogen atoms bonded to one carbon atom, such as guanidine skeleton, is inferior in the effect of suppressing thickening over time, when compared with a compound having two or fewer nitrogen atoms bonded to one carbon atom.

The nitrogen-containing compound (B) having the above feature (1) has a molecular weight equal to or less than 280, preferably equal to or less than 230, more preferably equal to or less than 150, even more preferably equal to or less than 100. When the molecular weight is equal to or less than 280, thickening over time during heating can be suppressed even with a small amount added. The lower limit of the molecular weight is preferably, but not limited to, equal to or more than 17, more preferably equal to or more than 30, even more preferably equal to or more than 40, particularly preferably equal to or more than 50.

The nitrogen-containing compound (B) having the above feature (2) has an amine equivalent weight of less than 225 g/eq, preferably equal to or less than 200 g/eq, more preferably equal to or less than 150 g/eq, even more preferably equal to or less than 100 g/eq. When the amine equivalent weight is less than 225 g/eq, thickening over time during heating can be suppressed even with a small amount added. The lower limit of the amine equivalent weight is not limited, but the amine equivalent weight is preferably equal to or more than 10 g/eq, more preferably equal to or more than 20 g/eq, even more preferably equal to or more than 30 g/eq, particularly preferably equal to or more than 40 g/eq. If the amine equivalent weight is equal to or less than 10 g/eq, the compound is often not solid near room temperature (23°C) and tends to be poor in handleability. The amine equivalent weight is the mass of the nitrogen-containing compound (B) containing one equivalent weight of amino group and can be obtained according to the following formula (I): amine equivalent weight (g/eq) = the molecular weight of the nitrogen-containing compound (B)/the number of primary amino groups (-NH2) and secondary amino groups (-NH-) in the nitrogen-containing compound (B)

The melting point of the nitrogen-containing compound (B) is preferably, but not limited to, 70 to 290°C. The lower limit of the melting point is preferably equal to or higher than 80°C, even more preferably equal to or higher than 90°C, particularly preferably equal to or higher than 100°C. The upper limit of the melting point is more preferably equal to or lower than 260°C, even more preferably equal to or lower than 230°C, particularly preferably equal to or lower than 210°C, especially preferably equal to or lower than 190°C, most preferably equal to or lower than 170°C. When the melting point is within the above range, the handling of the nitrogen-containing compound (B) is easy and excellent effects tend to be exhibited because the resin composition melts at the melt molding temperature of the EVOH (A).

Specific examples of the nitrogen-containing compound (B) include amino acids such as inorganic amino compounds and organic amino compounds. These may be used alone or in combination of two or more.

Examples of the inorganic amino compounds include hydroxylamine, chloramine, and ammonia.

Examples of the organic amino compounds include aliphatic amines such as methanolamine, ethanolamine, dimethylamine, diethylamine, isopropylamine, butylamine, ethylenediamine, propylenediamine, diethylenetriamine, 1,2-diaminopropane, 1,3-diaminopropane, triethylenetetramine, tetraethylenepentamine, iminobis propylamine, hexamethylenediamine, 3-azahexane-1,6-diamine, 2-acrylamido-2-methylpropanesulfonic acid, and 4,7-diazadecane-1,10-diamine, heterocyclic amines such as proline, hydroxyproline, ethyleneimine, morpholine, α-amino-ε-caprolactam, and acetaldehyde ammonia, heterocyclic aromatic amines such as 2-undecylimidazole, pyrrolidine, piperidine, and piperazine, compounds with urea bonds such as urea, thiourea, methylurea, ethylurea, dimethylurea, diethylurea, ethyleneurea (2-imidazolidinone), azodicarbonamide, glycolylurea, and acetylurea, compounds with amide bonds such as formamide, acetamide, benzamide, oxamide, oxamic acid, succinamide, and malonamide, compounds with imide bonds such as succinimide, phthalimide, maleimide, 1-methylol-5,5-dimethylhydantoin, and isocyanuric acid, amino acids such as L- and/or D-forms of alanine, valine, leucine, isoleucine, phenylalanine, tyrosine, thyroxine, methionine, cysteine, homocysteine, taurine, serine, threonine, asparagine, aspartic acid, glutamine, glutamic acid, proline, etc., and basic amino acids such as tryptophan and histidine. However, benzotriazole is excluded.

Among these nitrogen-containing compounds (B), the organic amino compounds are preferred in order to suppress thickening over time. The heterocyclic aromatic amines, the compounds with urea bonds, and the amino acids are more preferred, 2-undecylimidazole, 1-dodecylhydantoin, ethyleneurea (2-imidazolidinone), basic amino acids are even more preferred, and ethyleneurea (2-imidazolidinone) and histidine are particularly preferred.

The upper limit of the amount of the nitrogen-containing compound (B) in the present resin composition is preferably, but not limited to, less than 9% by mass with respect to the total amount of the EVOH (A) and the nitrogen-containing compound (B), more preferably equal to or less than 8% by mass, more preferably equal to or less than 7% by mass, particularly preferably equal to or less than 5% by mass, especially preferably equal to or less than 3% by mass, most preferably equal to or less than 1% by mass. When the amount of the nitrogen-containing compound (B) is within the above range, the effect of suppressing thickening during heating tends to be further enhanced.

The lower limit of the amount of the nitrogen-containing compound (B) is preferably, but not limited to, equal to or more than 0.000001% by mass with respect to the total amount of the EVOH (A) and the nitrogen-containing compound (B), more preferably equal to or more than 0.00001% by mass, even more preferably equal to or more than 0.0001% by mass, particularly preferably equal to or more than 0.001% by mass, especially preferably equal to or more than 0.01% by mass, most preferably equal to or more than 0.1% by mass. When the amount of the nitrogen-containing compound (B) is within the above range, the effect of suppressing thickening during heating tends to be further enhanced.

### [Alkali Metal Compound (C)]

The present resin composition contains an alkali metal compound (C). Examples of alkali metal of the alkali metal compound (C) include lithium, sodium, potassium, rubidium, and cesium. These can be used alone or in combination of two or more. Among these, sodium and potassium are preferred, and sodium is particularly preferred.

Examples of the alkali metal compound (C) include alkali metal salts and alkali metal hydroxides. Preferably, these are water-soluble. Among these, the alkali metal salts are preferred in terms of dispersibility.

It is preferable that inorganic layered compounds and double salts are excluded from the alkali metal compound (C) in terms of cost efficiency and dispersibility.

Examples of the alkali metal salts include inorganic salts such as carbonate, bicarbonate, phosphate, borate, sulfate, and chloride; monocarboxylates with 2 to 11 carbon atoms such as acetate, butyrate, propionate, enanthate, and caprate; dicarboxylates with 2 to 11 carbon atoms such as oxalate, malonate, succinate, adipate, suberate, and sebacate; monocarboxylates with 12 or more carbon atoms such as laurate, palmitate, stearate, 12-hydroxystearate, behenate, and montanate, and carboxylates such as salt of carboxylic acid with polymer end carboxyl of EVOH. These can be used alone or in combination of two or more. Among these, the monocarboxylates with 2 to 11 carbon atoms are preferred, and acetate is more preferred.

The alkali metal salt may be present, for example, as an alkali metal salt, or in an ionized form or in a complex form coordinated with the resin or other ligands in the present resin composition.

The alkali metal compound (C) typically has a molecular weight of 20 to 10000, preferably 20 to 1000, particularly preferably 20 to 500.

The amount of the alkali metal compound (C) is typically, but not limited to, 1 to 1000 ppm by mass on a metal basis with respect to the present resin composition, preferably 5 to 800 ppm, even more preferably 10 to 700 ppm, particularly preferably 100 to 600 ppm. If the amount of the alkali metal compound (C) is too large, the productivity tends to be impaired, and if too small, the thermal stability tends to be reduced.

When two or more alkali metal compounds (C) are used in combination, the amount of the alkali metal compound (C) is the total amount of all alkali metals on a metal basis.

The amount of the alkali metal compound (C) can be measured, for example, by an atomic absorption spectrometer using a test solution prepared by heating and ashing the present resin composition, and acid-treating the resulting ash with hydrochloric acid or the like, and adding pure water to the resulting solution to a constant volume.

### [Alkaline Earth Metal Compound (D)]

The present resin composition contains an alkaline earth metal compound (D). Examples of alkaline earth metal of the alkaline earth metal compound (D) include beryllium, magnesium, calcium, strontium, barium, and radium. These can be used alone or in combination of two or more. Among these, magnesium and calcium are preferred in terms of commercial availability and cost efficiency.

Examples of the alkaline earth metal compound (D) include salts, oxides, and hydroxides of alkaline earth metals. Among these, alkaline earth metal oxides and alkaline earth metal salts are preferred in terms of cost efficiency and dispersibility, and alkaline earth metal salts are particularly preferred.

It is preferable that inorganic layered compounds such as montmorillonite and double salts such as hydrotalcite are excluded from the alkaline earth metal compound (D) in terms of cost efficiency and dispersibility.

Examples of the alkaline earth metal oxides include magnesium oxide and calcium oxide. Examples of the alkaline earth metal salts include inorganic salts such as carbonate, bicarbonate, phosphate, borate, sulfate, and chloride, and carboxylates.

Among these, the phosphates and carboxylates of alkaline earth metals are preferred in terms of excellence in the effect of suppressing thickening during heating.

Examples of the carboxylates include saturated or unsaturated carboxylates.

The carboxylate anion typically has 2 to 25 carbon atoms, preferably 2 to 22 carbon atoms in terms of productivity, particularly preferably 6 to 20 carbon atoms.

Specific examples of the carboxylates include monovalent carboxylates such as acetate, butyrate, propionate, enanthate, caprate, laurate, palmitate, stearate, 12-hydroxystearate, behenate, and montanate, and divalent carboxylates such as oxalate, malonate, succinate, adipate, suberate, and sebacate. These can be used alone or in combination of two or more. Linear saturated carboxylates are preferred in terms of commercially availability, monovalent carboxylates are more preferred, and acetate is particularly preferred.

The alkaline earth metal compound (D) may be in any form, such as solid (powder, fine powder, flake, etc.), semi-solid, liquid, paste, solution, and emulsion (aqueous dispersion) forms. Among these, the powder form is preferred.

The amount of the alkaline earth metal compound (D) is typically, but not limited to, 0.1 to 500 ppm by mass on a metal basis with respect to the present resin composition, preferably 0.5 to 300 ppm, more preferably 1 to 200 ppm, even more preferably 2 to 150 ppm. If the amount of the alkaline earth metal compound (D) is too large, the thermal stability tends to be reduced, and if too small, the moldability of the resin composition tends to be reduced.

When two or more alkaline earth metal compounds (D) are used in combination, the amount of the alkaline earth metal compound (D) is the total amount of all alkaline earth metals on a metal basis.

The amount of the alkaline earth metal compound (D) can be measured, for example, by an atomic absorption spectrometer using a test solution prepared by heating and ashing the present resin composition, and acid-treating the resulting ash with hydrochloric acid or the like, and adding pure water to the resulting solution to a constant volume.

### [Ratio (C/D) of Amount of Alkali Metal Compound (C) on Metal Basis to Amount of Alkaline Earth Metal Compound (D) on Metal Basis]

In the present resin composition, the ratio (C/D) of the amount of the alkali metal compound (C) on a metal basis to the amount of the alkaline earth metal compound (D) on a metal basis is greater than 0.5. The ratio (C/D) is preferably equal to or more than 1, more preferably equal to or more than 2, even more preferably equal to or more than 8, particularly preferably equal to or more than 15.

The upper limit of the ratio (C/D) is typically, but not limited to, equal to or less than 10000, preferably equal to or less than 5000, more preferably equal to or less than 1000, even more preferably equal to or less than 300, particularly preferably equal to or less than 50.

When the ratio (C/D) is within the above range, the thermal stability of the present resin composition can be increased.

### [Boron Compound]

It is preferable that the present resin composition further contains a boron compound in order to further enhance the effect of suppressing thickening over time during heating.

The boron compound is, for example, boric acid or a metal salt thereof. Examples include boric acid, calcium borate, cobalt borate, zinc borate (zinc tetraborate, zinc metaborate, etc.), aluminum potassium borate, ammonium borate (ammonium metaborate, ammonium tetraborate, ammonium pentaborate, ammonium octaborate, etc.), cadmium borate (cadmium orthoborate, cadmium tetraborate, etc.), potassium borate (potassium metaborate, potassium tetraborate, potassium pentaborate, potassium hexaborate, potassium octaborate, etc.), silver borate (silver metaborate, silver tetraborate, etc.), copper borate (copper II borate, copper metaborate, copper tetraborate, etc.), sodium borate (sodium metaborate, sodium diborate, sodium tetraborate, sodium pentaborate, sodium hexaborate, sodium octaborate, etc.), lead borate (lead metaborate, lead hexaborate, etc.), nickel borate (nickel orthoborate, nickel diborate, nickel tetraborate, nickel octaborate, etc.), barium borate (barium orthoborate, barium metaborate, barium diborate, barium tetraborate, etc.), bismuth borate, magnesium borate (magnesium orthoborate, magnesium diborate, magnesium metaborate, trimagnesium tetraborate, pentamagnesium tetraborate, etc.), manganese borate (manganous borate, manganese metaborate, manganese tetraborate, etc.), lithium borate (lithium metaborate, lithium tetraborate, lithium pentaborate, etc.), and borate minerals such as borax, kernite, inyoite, kotoite, suanite, and szaibélyite. These may be used alone or in combination of two or more. Among these, borax, boric acid, and sodium borate (sodium metaborate, sodium diborate, sodium tetraborate, sodium pentaborate, sodium hexaborate, sodium octaborate, etc.) are preferred.

The amount of the boron compound is not limited, but the lower limit of the amount of the boron compound is preferably equal to or more than 1 ppm on a boron basis with respect to the EVOH (A), more preferably equal to or more than 10 ppm, particularly preferably equal to or more than 20 ppm, especially preferably equal to or more than 50 ppm. The upper limit of the amount of the boron compound is preferably equal to or less than 1000 ppm on a boron basis with respect to the EVOH (A), more preferably equal to or less than 500 ppm, particularly preferably equal to or less than 300 ppm, especially preferably equal to or less than 100 ppm. When the amount of the boron compound is within the above range, the effect of improving long-run moldability can be further enhanced because of the synergistic action with the nitrogen-containing compound (B). The reason why the excellent effect can be achieved by using a particular amount of the boron compound is not clear, but it is presumed that adjustment of the melting viscosity enhances discharging properties of the resin composition.

The amount of the boron compound on a boron basis can be measured by a known analysis method. For example, the boron amount can be determined by inductively coupled plasma atomic emission spectroscopy (ICP-AES) using a test solution prepared by wet-decomposing the present resin composition and making a constant volume.

### [Other Components]

The present resin composition can contain a thermoplastic resin (for example, various thermoplastic resins such as polyamide, polyester, polyethylene, polypropylene, and polystyrene) other than the EVOH (A) in a range that does not impair the effects of the present disclosure (for example, typically equal to or less than 30% by mass, preferably equal to or less than 20% by mass, particularly preferably equal to or less than 10% by mass of the present resin composition). These thermoplastic resins may be used alone or in combination of two or more.

The present resin composition may further contain plasticizer, reinforcing agent, filler, pigment, dye, lubricant, antioxidant, antistatic agent, UV absorber, thermal stabilizer, photostabilizer, surfactant, antibacterial agent, antistatic agent, drying agent, antiblocking agent, flame retardant, crosslinker, curing agent, foaming agent, nucleating agent, and the like, if necessary, in a range that does not impair the effects of the present disclosure (for example, equal to or less than 5% by mass of the present resin composition). These may be used alone or in combination of two or more.

### [Preparation of Resin Composition]

The present resin composition can be prepared by mixing the EVOH (A), the nitrogen-containing compound (B), the alkali metal compound (C), and the alkaline earth metal compound (D), and optional components blended if necessary.

The mixing is not limited to any particular method, and a mixture of the components by dry blending may be directly used as the present resin composition. However, typically, the components are mixed by melt mixing, solution mixing, or the like and the mixture is formed into a shape that is easy to handle, such as pellets, and prepared as the present resin composition. The melt mixing is preferred in terms of productivity.

As an example of the melt mixing, typically, the components are dry-blended and then melted to be mixed. As a mixing apparatus, for example, a known kneading apparatus such as kneader-ruder, extruder, mixing roll, Banbury mixer, or plastomill can be used. Typically, a single-screw or twin-screw extruder is preferably used from an industrial viewpoint. The extruder is preferably provided with a vent suction device, a gear pump device, a screen device, and the like, if necessary.

The melt kneading temperature is typically in the range of 160 to 300°C as the setting temperature of an extruder and a die, preferably 170 to 260°C, particularly preferably 180 to 240°C. If the melt kneading temperature is too low, the resin is unmelted to make the processing state unstable, and if too high, the resin composition is thermally degraded and the quality of the resulting molded article tends to be reduced.

The adjustment of the amounts of the nitrogen-containing compound (B), the alkali metal compound (C), and the alkaline earth metal compound (D), and optional components in the present resin composition is not limited to any particular method. For example, an adjustment method in which desired amounts are added or a method in which a master batch is prepared and diluted may be employed. When a master batch is diluted, the dilution may be performed by any method, but dry blending is preferred in terms of productivity.

The optional components such as the boron compound may be added during production of the EVOH (A), instead of the above methods.

The present resin composition thus obtained is suppressed in thickening over time during heating and consequently has excellent long-run moldability. The thickening ratio of the present resin composition calculated under the following measurement condition is typically equal to or less than 1.45, preferably equal to or less than 1.40, particularly preferably equal to or less than 1.35.

The lower the lower limit of the thickening ratio, the better. The lower limit of the thickening ratio is typically 1.0, preferably equal to or more than 0.5, particularly preferably equal to or more than 0.1.

### [Measurement Condition]

The resin composition is melt-kneaded and the thickening ratio can be calculated from the torques after the elapse of 60 minutes and after the elapse of 180 minutes according to the following formula. Thickening ratio = torque after the elapse of 180 minutes of measurement/torque after the elapse of 60 minutes of measurement

The present resin composition is molded typically by melt molding into molded articles such as films, sheets, cups, and fibers. Examples of the melt molding include extrusion molding (T-die extrusion, inflation extrusion, blow molding, melt spinning, profile extrusion, etc.), and injection molding. The melt molding temperature can typically be selected as appropriate from 150 to 300°C. The resulting molded articles (films, sheets, cups, fibers, etc.) can undergo secondary processing such as uniaxial or biaxial stretching and vacuum forming.

The molded article obtained by melt molding using the present resin composition may be a molded article including the present resin composition alone, or may be a molded article including a multilayer structure of a laminate with a base material such as another resin sheet, film, paper, unwoven fabric, or metal foil.

In production of the multilayer structure, any of the following methods can be employed: a method in which the other base material is laminated with a film or a sheet molded using the present resin composition by melt extrusion; a method in which the present resin composition is laminated with the other base material by melt extrusion; a method in which the present resin composition and the other base material are co-extruded; and a method in which a film or a sheet made of the present resin composition and a layer of the other base material are dry-laminated using a known adhesive agent such as organic titanium compound, isocyanate compound, polyester compound, or polyurethane compound.

### EXAMPLES

The present disclosure will be described more specifically below using examples. However, it should be understood that the present disclosure is not limited to the following examples within the scope of the present disclosure.

Prior to examples, the following components were prepared.

### [EVOH (A)]

- EVOH (A1): ethylene structural unit content 29 mol%, MFR 3.8 g/10 minutes (at 210°C with a load of 2160 g), saponification degree 99.6 mol%, the amount of alkali metal compound (metal basis) 170 ppm (sodium acetate), the amount of alkaline earth metal compound (metal basis) 8.1 ppm (magnesium acetate 0.1 ppm, calcium dihydrogen phosphate 8 ppm), the amount of boron compound (boron basis) 70 ppm
- EVOH (A2): ethylene structural unit content 30.1 mol%, MFR 8.0 g/10 minutes (at 210°C with a load of 2160 g), saponification degree 99.8 mol%, the amount of alkali metal compound (metal basis) 110 ppm (sodium acetate), the amount of alkaline earth metal compound (metal basis) 40.3 ppm (magnesium acetate 0.3 ppm, calcium dihydrogen phosphate 40 ppm), the amount of boron compound (boron basis) 0 ppm
- EVOH (A3): ethylene structural unit content 29.3 mol%, MFR 8.8 g/10 minutes (at 210°C with a load of 2160 g), saponification degree 99.6 mol%, the amount of alkali metal compound (metal basis) 6 ppm (sodium acetate), the amount of alkaline earth metal compound (metal basis) 15 ppm (magnesium acetate 15 ppm, calcium dihydrogen phosphate 0 ppm), the amount of boron compound (boron basis) 0 ppm

### <Amount of Boron Compound (Boron Basis) in Pellets>

The amount of boron compound in the EVOH (A) was determined by an inductively coupled plasma atomic emission spectrometer (ICP-AES) (720-ES series available from Agilent Technologies) using a test solution prepared by treating 0.1 g of pellets of the EVOH (A) with concentrated nitric acid by microwave decomposition and adding pure water to the resulting solution to a constant volume (0.75 mg/mL). The amount of boron measured corresponds to the boron amount derived from the boron compound.

### [Nitrogen-Containing Compound (B)]

- Nitrogen-containing compound (B1): 2-imidazolidinone (available from Tokyo Chemical Industry Co., Ltd., molecular weight 86, amine equivalent weight 43 g/eq, melting point 132°C, the number of nitrogen atoms bonded to one carbon atom is two or fewer)
- Nitrogen-containing compound (B2): L-histidine (available from Tokyo Chemical Industry Co., Ltd., molecular weight 155, amine equivalent weight 77.5 g/eq, melting point 281°C, the number of nitrogen atoms bonded to one carbon atom is two or fewer)
- Nitrogen-containing compound (B'): cyanoguanidine (available from Tokyo Chemical Industry Co., Ltd., molecular weight 84, amine equivalent weight 28 g/eq, melting point 281°C, including a structure in which the number of nitrogen atoms bonded to one carbon atom is three)
- Nitrogen-containing compound (B"): bis(2,2,6,6-tetramethylpiperidin-4-yl) sebacate (BASF Japan Ltd. "Tinuvin 770 DF", molecular weight 480, amine equivalent weight 240 g/eq, the number of nitrogen atoms bonded to one carbon atom is two or fewer)

### <Example 1>

A resin composition was prepared by dry-blending the EVOH (A1) and the nitrogen-containing compound (B1) so that (B1) was 0.1% by mass with respect to the total amount of (A1) and (B1).

### <Examples 2 to 5, Comparative Examples 1 to 3>

Resin compositions were prepared in the same way as in Example 1 except that the kinds and amounts of the EVOH (A) and the nitrogen-containing compound (B), and the ratio (C/D) of the amount of the alkali metal compound (C) to the amount of the alkaline earth metal compound (D) were changed as listed in Table 1 below.

The thickening suppression rate was evaluated as follows using the prepared resin compositions.

### <Evaluation of Thickening Suppression Rate>

First, 55 g of each resin composition was melt-kneaded under the following melt kneading conditions, and the change in torque over time was recorded. The EVOH (A1), the EVOH (A2), and the EVOH (A3) were melt-kneaded similarly as blanks, and the changes in torque over time were recorded.

### [Melt Kneading Conditions]

Apparatus: Brabender plastograph
Conditions: 240°C, 50 rpm, preheat for 5 minutes, kneading for 180 minutes

The thickening ratio was calculated according to the following formula, from the determined torques after the elapse of 60 minutes and after the elapse of 180 minutes. Thickening ratio = torque at the elapse of 180 minutes of measurement/torque at the elapse of 60 minutes of measurement

Next, the thickening suppression rate was calculated according to the following formula, from the calculated thickening ratio in each example or comparative example and the thickening ratio of the blank (the resin composition containing no nitrogen-containing compound (B) in each example or comparative example). Thickening suppression rate (%) = [thickening ratio (blank) - thickening ratio (example or comparative example)]/thickening ratio (blank) × 100

**[Table 1]**

| | Resin composition | | | | | | Evaluation | |
|---|---|---|---|---|---|---|---|---|
| | EVOH (A) | Nitrogen-containing compound (B) | | Alkali metal compound (C) | Alkaline earth metal compound (D) | Amount ratio (C/D) | Thickening ratio | Thickening suppression rate (%) |
| | | Kind | Amount ^{*1} (% by mass) | Amount on metal basis ^{*2} (ppm) | Amount on metal basis ^{*2} (ppm) | | | |
| Example 1 | A1 | B1 | 0.1 | 170 | 8.1 | 21 | 1.36 | 23 |
| Example 2 | A1 | B1 | 0.5 | 170 | 8.1 | 21 | 1.29 | 27 |
| Example 3 | A1 | B1 | 1.0 | 170 | 8.1 | 21 | 1.32 | 26 |
| Example 4 | A2 | B2 | 0.5 | 110 | 40.3 | 2.7 | 1.37 | 18 |
| Example 5 | A2 | B2 | 5 | 110 | 40.3 | 2.7 | 1.38 | 17 |
| Comparative Example 1 | A3 | B2 | 0.5 | 6 | 15 | 0.4 | 1.55 | -^{*3} |
| Comparative Example 2 | A2 | B' | 0.1 | 110 | 40.3 | 2.7 | 1.62 | 2 |
| Comparative Example 3 | A2 | B" | 0.1 | 110 | 40.3 | 2.7 | 1.67 | -2 |

| | | | | | | | | |
|---|---|---|---|---|---|---|---|---|
| B1: 2-imidazolidinone (molecular weight 86, amine equivalent weight 43g/eq, the number of nitrogen atoms bonded to one carbon atom is two or fewer) B2: L-histidine(molecular weight 155, amine equivalent weight 77.5g/eq, the number of nitrogen atoms bonded to one carbon atom is two or fewer) B': cyanoguanidine (molecular weight 84, amine equivalent weight 28g/eq, including a structure in which the number of nitrogen atoms bonded to one carbon atom is three) B": bis(2,2,6,6-tetramethylpiperidin-4-yl) sebacate (molecular weight 480, amine equivalent weight 240g/eq, the number of nitrogen atoms bonded to one carbon atom is two or fewer) *1: The amount with respect to the total amount of EVOH (A) and nitrogen-containing compound (B) *2: The amount with respect to the resin composition *3: Not calculated because the thickening ratio of EVOH (A3) was not calculated | | | | | | | | |

The results in Table 1 above indicate that the resin compositions in Examples 1 to 5 which contain the EVOH (A) and the particular nitrogen-containing compound (B), alkali metal compound (C), and alkaline earth metal compound (D) and in which the ratio (C/D) of the amount of the alkali metal compound (C) on a metal basis to the amount of the alkaline earth metal compound (D) on a metal basis is within a particular range are suppressed in thickening over time, compared with the blank EVOHs (A1) and (A2) containing no nitrogen-containing compound (B), and consequently have excellent long-run moldability.

It is also understood that the resin composition in Comparative Example 1 in which the ratio (C/D) of the amount of the alkali metal compound (C) on a metal basis to the amount of the alkaline earth metal compound (D) on a metal basis is less than 0.5 has a high thickening ratio, compared with Examples 1 to 5.

It is also understood that the resin composition in Comparative Example 2 in which the nitrogen-containing compound (B) is a compound with a structure having three nitrogen atoms bonded to one carbon atom has a high thickening ratio and is inferior in the thickening suppressing effect, compared with Examples 1 to 5.

It is also understood that the resin composition in Comparative Example 3 in which the nitrogen-containing compound (B) is a compound that does not have the particular molecular weight and the particular amine equivalent weight has a high thickening ratio and is inferior in the thickening suppressing effect, compared with Examples 1 to 5.

In molded articles including the resin compositions in Examples 1 to 5 and multilayer structures having layers including the resin compositions in Examples 1 to 5, thickening over time during heating can also be suppressed.

While specific forms of the embodiments of the present disclosure have been shown in the above examples, the examples are merely illustrative but not limitative. It is contemplated that various modifications apparent to those skilled in the art could be made within the scope of the present disclosure.

### INDUSTRIAL APPLICABILITY

The resin composition according to the present disclosure is suppressed in thickening over time during heating and consequently has excellent long-run moldability. The resin composition according to the present disclosure is therefore particularly useful as various packaging materials for various foods, condiments such as mayonnaise and dressing, fermented foods such as miso, fat and oil foods such as salad oil, beverages, cosmetics, and pharmaceutical products.

## Claims

1. A resin composition comprising:
an ethylene-vinyl alcohol copolymer (A),
a nitrogen-containing compound (B),
an alkali metal compound (C), and
an alkaline earth metal compound (D),
wherein a ratio (C/D) of an amount of the alkali metal compound (C) on a metal basis to an amount of the alkaline earth metal compound (D) on a metal basis is greater than 0.5, and
wherein the nitrogen-containing compound (B) has a structure having two or fewer nitrogen atoms bonded to each carbon atom, and satisfies at least one of following (1) and (2):
(1) the nitrogen-containing compound (B) has a molecular weight equal to or less than 280
(2) the nitrogen-containing compound (B) has an amine equivalent weight of less than 225 g/eq as defined by a following formula (I): amine equivalent weight (g/eq) = the molecular weight of the nitrogen-containing compound (B)/a number of primary amino groups (-NH2) and secondary amino groups (-NH-) in the nitrogen-containing compound (B).

2. The resin composition according to claim 1, wherein the nitrogen-containing compound (B) comprises at least one of a primary amino group and a secondary amino group.

3. The resin composition according to claim 1 or 2, wherein the nitrogen-containing compound (B) has a melting point of 70 to 290°C.

4. The resin composition according to claim 1 or 2, wherein the nitrogen-containing compound (B) comprises 2-imidazolidinone.

5. The resin composition according to claim 1 or 2, wherein the nitrogen-containing compound (B) comprises an amino acid.

6. The resin composition according to claim 1 or 2, wherein the nitrogen-containing compound (B) comprises a basic amino acid.

7. The resin composition according to claim 1 or 2, wherein the nitrogen-containing compound (B) comprises histidine.

8. A molded article comprising the resin composition according to claim 1 or 2.

9. A multilayer structure comprising a layer comprising the resin composition according to claim 1 or 2.

10. A method for producing the resin composition according to claim 1 or 2, the method comprising:
mixing the ethylene-vinyl alcohol copolymer (A), the nitrogen-containing compound (B), the alkali metal compound (C), and the alkaline earth metal compound (D).
